# EUROPÄISCHE PATENTANMELDUNG

(11) **EP 1 692 987 A1**
(43) Veröffentlichungstag der Anmeldung: **23.08.2006**
(21) Anmeldenummer: 05012521.0
(22) Anmeldetag: 10.06.2005
(51) Int. Cl.: A47J 36/06

(54) **Weisswursttopf mit Deckel**

(30) Priorität: 18.02.2005 DE 202005002658 U
(71) Anmelder: Beischl, Georg, 81549 München (DE)
(72) Erfinder: Beischl, Georg, 81549 München (DE)
(74) Vertreter: Patentanwälte Zellentin & Partner

(57) **Zusammenfassung**

Die Erfindung betrifft einen Weißwursttopf mit Deckel zur Zubereitung von Weißwürsten (13) zum Verzehr. Erfindungsgemäß ist am Deckel (7) eine in den Topf (1) einführbare Einsatzplatte (12) auf- und abbeweglich befestigt. Die Einsatzplatte (12) ist gelocht und weist ein Eigengewicht auf, die sie nach unten zieht. Der Deckel (7) enthält Entlüftungsschlitze (9), die auch als im Rand (6) des Topfes (1) ausgeführte Einkerbungen (19) ausgeführt sein können. Weiterhin ist der Deckel (7) mindestens mit einem Rundstab (10) für die Einsatzplatte (12) verbunden, der auswechselbar und zentral mittels einer Schraubverbindung (11) befestigt ist.

## Beschreibung

Insbesondere in Bayern, aber auch in zunehmendem Maße deutschlandweit und über die Grenzen Deutschlands hinaus, erfreuen sich Weißwürste immer größerer Beliebtheit. Durch die Zubereitung von Weißwürsten und dann unmittelbar vor dem Verzehr können sich eine Reihe von Problemen ergeben, die die Freude am Genuss der Weißwürste mindern können.

Zum einen wird oftmals nicht genug Brüh- oder Kochflüssigkeit zum Erwärmen/Erhitzen verwendet, so dass die Weißwürste über den Spiegel der Brüh-oder Kochflüssigkeit hinausragen, d. h. nicht vollständig von Flüssigkeit abgedeckt sind, so dass unschöne Verfärbungen durch Oxidation an der Luft bis ins Bräunliche hinein bei den nicht abgedeckten Teilen der Weißwürste zu beobachten sind. Oftmals sind auch die Kochtöpfe durch geschlossene Deckel abgedeckt, so dass es leicht zur Erhöhung des Dampfdrucks im Topf kommt, was zum Aufplatzen der Weißwürste führt. Diese verlieren an Geschmack, da sie auslaugen. In bayerischen Wirtshäusern gibt es spezielle Terrinen, in denen die Weißwürste in ihrer jeweiligen Brühflüssigkeit serviert werden und die oftmals Deckel aufweisen. Durch die Brühflüssigkeit werden die Weißwürste bis zum Verzehr warmgehalten und es wird einer Verfärbung vorgebeugt.

Der Neuerung liegt die Aufgabe zugrunde, einen Weißwursttopf anzugeben, durch den auch von ungeübten Köchen mindestens ein Teil der oben genannten Nachteile vermieden werden können und der einfach zu bedienen und auf einer Unterlage direkt am Tisch, wo der Verzehr geplant ist, eingesetzt werden kann, wobei ein eingesetzter Deckel nicht durch Abtropfen die unmittelbare Umgebung des Topfes vernässen soll.

Diese Aufgabe wird durch einen Weißwursttopf mit Deckel dadurch gelöst, dass am Deckel eine in den Topf einführbare Einsatzplatte auf- und abbeweglich befestigt ist.

Durch diese Einsatzplatte lassen sich alle in den Topf eingeführten Weißwürste nach unten drücken, so dass die Füllmenge an Brühflüssigkeit genau bemessen werden kann, so dass keine Weißwürste während der Zubereitung mit Luft in Kontakt kommen können.

Vorzugsweise Merkmale des Weißwursttopfes mit Deckel sind den Unteransprüchen zu entnehmen.

Nachstehend wird die Erfindung an einem Ausführungsbeispiel unter Bezug auf Figuren und Varianten näher erläutert. Es zeigt:
- Fig. 1: einen Querschnitt durch einen Weißwursttopf mit aufgesetztem Deckel;
- Fig. 2: eine Draufsicht auf einen Weißwursttopf mit eingeführter Einsatzplatte; und
- Fig. 3: einen Deckel eines Weißwursttopfes mit beweglicher Einsatzplatte.

Ein Topf 1 weist einen beliebigen für Gas- und/oder Elektroherde geeigneten Boden 2 auf. Er enthält einen inneren Hohlraum 3, der von einer senkrecht zum Boden 2 ausgerichtete Wandung 4 umgeben ist. An der äußeren Seite der Wandung 4 sind seitlich einander diametral gegenüberliegend Handgriffe 5 befestigt, die eine beliebige bekannte Ausführung aufweisen und vorteilhafterweise gegenüber der Wandung 4 isoliert angebracht sind und zum Transport des Topfes 1 dienen. Am oberen Ende des Topfes 1 ist ein oberer Abschlussrand 6 ausgeführt, der vorzugsweise gebördelt ist. Auf diesem Abschlussrand 6 ist ein Topfdeckel 7 - in loser Passverbindung - aufgesetzt. Der Topfdeckel 7 weist einen Handgriff 8 oder Henkel und Entlüftungsschlitze 9 auf, die einen Druckausgleich in die Umgebungsluft ermöglichen, wenn der Topfinhalt erwärmt oder erhitzt wird, so dass kein großes Druckgefälle zwischen dem inneren Hohlraum 3 des Topfes 1 und der Umgebungsluft aufgebaut werden kann, d. h. ein möglicher Überdruck kann durch die Entlüftungsschlitze 9 entweichen.

Die Anzahl der Entlüftungsschlitze 9 ist im Ausführungsbeispiel mit zwei dargestellt. Die Schlitze 9 oder auch entsprechende Öffnungen 9a können jedoch eine beliebige Anzahl aufweisen und aus beliebigen Formgestaltungen z. B. rund, oval, länglich, eckig oder beliebigen Mischformen bestehen. Schlitze 9 zum Druckausgleich können auch nur oder zusätzlich im oberen Rand 6 des Topfes 1 ausgeführt sein.

Im Ausführungsbeispiel ist im Deckel 7 zentral ein ins Innere des Hohlraums 3 ragender Rundstab 10 mittels einer Schraubverbindung 11 fest angeordnet.

Statt eines zentralen Rundstabs 10 können auch zwei oder mehr Rundstäbe vorgesehen sein, vorzugsweise in gegenüber der Zentralachse des Topfes 1 symmetrischer Anordnung. Vorzugsweise ist jeder Rundstab 10 lösbar mit dem Deckel 7 verbunden. Dies kann wie beim Ausführungsbeispiel durch eine Schraubverbindung 11, eine Rastverbindung oder auf eine beliebig andere bekannte Art erfolgen, die einerseits lösbar oder andererseits unlösbar, d. h. starr gestaltet sein kann.

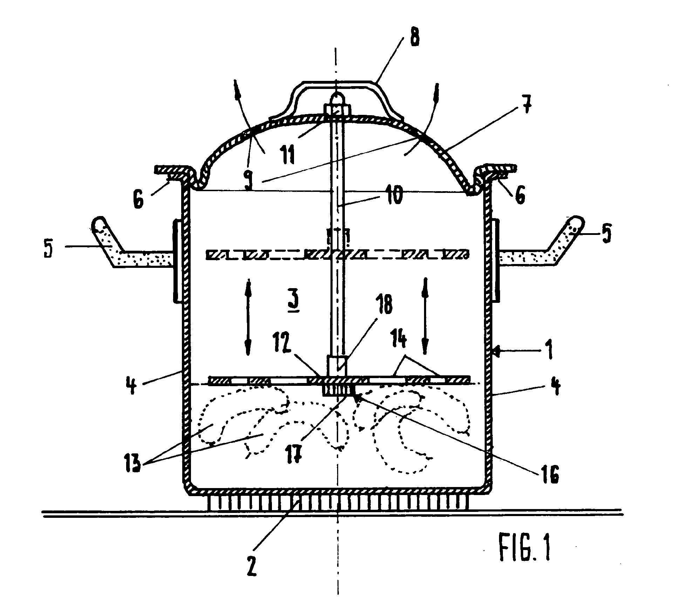

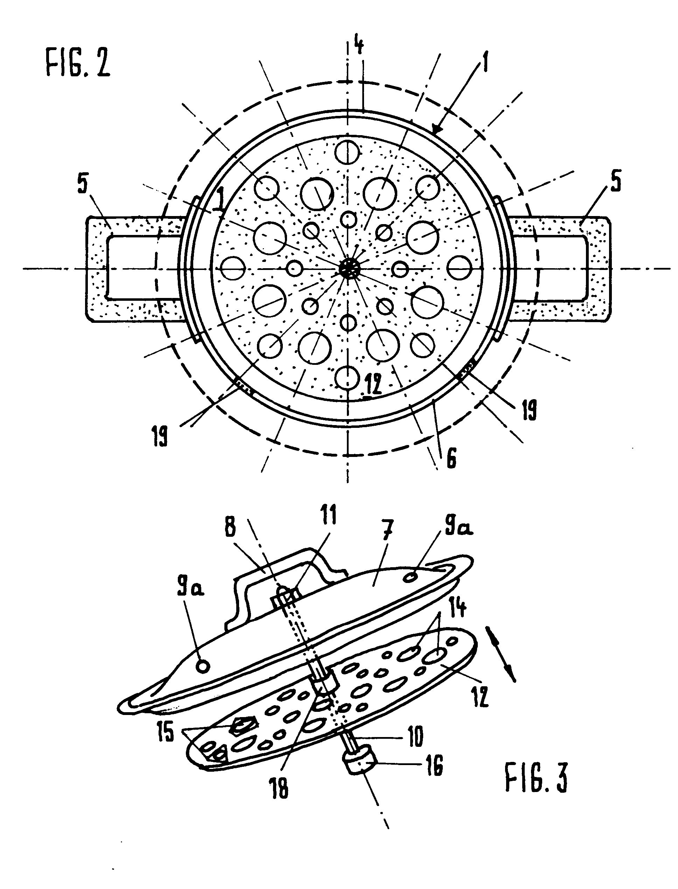

Auf dem in Fig.1 und 3 dargestellten zentralen einzigen Rundstab 10 ist auf- und abbeweglich eine Einsatzplatte 12 bzw. ein Taucheinsatz angeordnet. Durch diese Einsatzplatte 12 wird der Topf 1 zu einem speziellen Topf 1 für Weißwürste 13. Die Einsatzplatte 12 (s. Fig. 2) ist im Ausführungsbeispiel gelocht. Statt der in Fig. 1 bis 3 dargestellten runden Löcher 14 können zusätzlich oder allein anders gestaltete Öffnungen 15 vorgesehen sein, die z. B. auch drei- oder vieleckig, Langlöcher oder auch beliebig frei gestaltete Öffnungen sein können. Vorzugsweise ist die Bewegung der Einsatzplatte 12 nach unten in Richtung des Topfbodens 2 durch einen Begrenzungsanschlag 16 beliebiger bekannter Art begrenzt, wodurch die Mindestfüllmenge mit einer Flüssigkeit zum Erwärmen der Weißwürste 13 vorgebbar ist. Der Begrenzungsanschlag 16 kann beispielsweise durch eine auf den Rundstab 10 aufschraubbare Befestigungsschraube 17 oder auch durch eine beliebige Steck-oder Rastverbindung gestaltet sein.

Um eine lineare Auf- und Abbewegung der Einsatzplatte 12 im Hohlraum 3 des Weißwursttopfes 1 zu gewährleisten, kann bei einem einzigen Rundstab 10 eine darauf bewegliche aufgesetzte Buchse 18 aufweisen, die fest oder lösbar mit der Einsatzplatte 12 verbunden ist.

Bei einer in Fig. 2 angedeuteten Ausführung des Weißwursttopfes 1 können im Rand 6 des Weißwursttopfes 1 zumindest zwei Einkerbungen 19 oder Schlitze zwischen den Handgriffen 5 ausgeführt sein, die in ihrer Breite und Tiefe so bemessen sind, dass der Deckel 7 darin senkrecht ± 90° oder mit Neigung (85° - 50°) abgestellt werden kann, so dass eventuell am Topfdeckel 7 anhaftende Flüssigkeit in das Innere des Weißwursttopfes 1 abtropft. Bei einem größeren Topf 1 empfehlen sich mehrere derartiger Einkerbungen 19, die so gestaltet und angeordnet sind, dass von jeder Seite des Topfes 1 der Deckel 7 und auch die Einsatzplatte 12 mehr oder weniger senkrecht oder auch mit Neigung im Topf 1 abgestützt werden kann und dennoch der Zugang zu seinem Inhalt frei bleibt.

Der Weißwursttopf 1 kann aus Edelstahl, Aluminium oder anderen Metallen oder Metalllegierungen, aus Glas, Porzellan und sonstigen zur Herstellung von erhitzbaren Behältern dienenden Materialien bestehen. Der Deckel 7 und die Einsatzplatte 12 können aus den gleichen Materialien bestehen, sie können jedoch auch aus unterschiedlichen Materialien bestehen, wenn z. B. aus Gründen des Designs Kontraste aus mehreren Materialien gewünscht werden.

Vorzugsweise weist der Taucheinsatz 12 ein Eigengewicht auf, das die Weißwürste 13 im Topf 1 in der Nähe des Bodens 2 hält bzw. herabdrückt, wobei sie von der Flüssigkeit, die zum Erwärmen/Erhitzen dient, überdeckt werden, so dass kein Luftkontakt besteht, so dass sie weder oxidieren noch sich verfärben können.

Wenn Weißwürste 13 zubereitet werden sollen, hebt man den Deckel 7 ab, verschwenkt ihn, so dass die Einsatzplatte 12 in den Deckel 7 rutschen kann. Dann füllt man den Topf mit Flüssigkeit, z. B. Wasser oder einer Brühe, legt die gewünschte Anzahl von Weißwürsten 13 in den Topf 1 ein und bringt den Deckel 7 in den Bereich kurz vor seinem Aufsetzen und überprüft, ob der aufgrund seines Eigengewichts herabgerutschte Taucheinsatz 12 in die eingefüllte Flüssigkeit eintaucht. Falls das nicht der Fall ist, wird entsprechend aufgefüllt, sodann wird der Deckel 7 auf den Topf 1 aufgesetzt, wobei die Einsatzplatte 12 unter ihrem Eigengewicht die Weißwürste 13 beaufschlagt. Beim Erhitzen des Topfes 1 über seinen Boden 2 erwärmt sich die Flüssigkeit im Topf 1 und überträgt die Wärme auf die Weißwürste 13, die dadurch zubereitet werden. Durch die Einkerbungen 19 im Topfrand 6 und/oder die Entlüftungsschlitze 9 im Deckel 7 wird ein eventuell entstehender Überdruck abgebaut und an die Außenluft weitergegeben, so dass die Weißwürste 13 nicht aufplatzen, selbst wenn die Flüssigkeit kurz aufkocht. Wenn die Zubereitung beendet ist, kann der gesamte Weißwursttopf 1 auf einer Unterlage auf einem Tisch abgestellt werden, an dem der Verzehr erfolgen soll, d. h. der Weißwursttopf dient dann gleichzeitig als Serviertopf oder -kessel.

Der Weißwursttopf kann auch in Gaststätten, die einen großen Kessel mit sehr vielen Weißwürsten benötigen, in kleinere Portionen in kleinere Servierkessel mit einer auf die jeweilig bestellten Weißwürste 13 pro Tisch oder pro Personengruppe mit der erhitzten Flüssigkeit umgefüllt und serviert werden, wobei dann auch die Weißwürste 13 durch die Einsatzplatte 12 unter den Flüssigkeitsspiegel gedrückt und damit nicht oxidieren können und warm bleiben.

Durch Abheben des Deckels 7 und dessen Verschwenken in der Weise, dass die Einsatzplatte 12 am Deckel 7 anliegt und der Einführung des Deckels 7 mit der Einsatzplatte 12 in die Einkerbungen 19 im Rand 6 des Topfes 1 kann jedes Abtropfen außerhalb des Topfes 1 vermieden werden, was insbesondere in Privathaushalten erwünscht ist. Sobald alle Esser die gewünschte Anzahl an Weißwürsten 13 erhalten haben, wird der Deckel 7 wieder auf den Topf 1 aufgesetzt, so dass die erwärmte Flüssigkeit mit den restlichen Weißwürsten 13 weiterhin warm gehalten wird.

## Patentansprüche

1. Weißwursttopf (1) mit Deckel (7), **dadurch gekennzeichnet, dass** am Deckel (7) eine in den Topf (1) einführbare Einsatzplatte (12) auf- und abbeweglich befestigt ist.

2. Weißwursttopf (1) nach Anspruch 1, **dadurch gekennzeichnet, dass** die Einsatzplatte (12) eine gelocht ist und ein Eigengewicht aufweist, die sie nach unten zieht.

3. Weißwursttopf (1) nach Anspruch 1, **dadurch gekennzeichnet, dass** der Deckel (7) Entlüftungsschlitze (9) aufweist.

4. Weißwursttopf (1) nach Anspruch 3, **dadurch gekennzeichnet, dass** die Entlüftungsschlitze (9) im Rand (6) des Topfes (1) ausgeführte Einkerbungen (19) sind.

5. Weißwursttopf (1) nach Anspruch 1, **dadurch gekennzeichnet, dass** der Deckel (7) mindestens mit einem Rundstab (10) für die Einsatzplatte (12) verbunden ist.

6. Weißwursttopf (1) nach Anspruch 5, **dadurch gekennzeichnet, dass** mindestens ein Rundstab (10) auswechselbar mittels einer Schraubverbindung (11) am Deckel (7) befestigt ist.

7. Weißwursttopf (1) nach Anspruch 4 oder 5, **dadurch gekennzeichnet, dass** ein Rundstab (10) zentral angeordnet ist und einen Begrenzungsanschlag (16) für die auf ihm auf- und abbewegliche Einsatzplatte (12) am freien unteren Ende aufweist.

8. Weißwursttopf (1) nach einem der Ansprüche 1 bis 7, **dadurch gekennzeichnet, dass** er mindestens zwei nach oben offene senkrechte Einkerbungen (19) zur Aufnahme und zum Halten des Deckels (7) unter einem Winkel, der sein Abtropfen in den Topf (1) erlaubt, aufweist.

9. Weißwursttopf (1) nach Anspruch 8, **dadurch gekennzeichnet, dass** die Einkerbungen (19) zusätzlich die Aufnahme und Halterung der an den Deckel (7) herangeführten Einsatzplatte (12) gewährleistet.
